# EUROPÄISCHE PATENTSCHRIFT

(11) **EP 2 394 834 B1**
(45) Veröffentlichungstag und Bekanntmachung des Hinweises auf die Patenterteilung: **14.06.2017**
(21) Anmeldenummer: 11162799.8
(22) Anmeldetag: 18.04.2011
(51) Int. Cl.: B60J 5/04

(54) **Türaufprallträger**
Door impact absorber
Support de collision de porte

(30) Priorität: 10.06.2010 DE 102010023325
(43) Veröffentlichungstag der Anmeldung: 14.12.2011
(73) Patentinhaber: Benteler Automobiltechnik GmbH, 33102 Paderborn (DE)
(72) Erfinder: Wille, Andreas, 33102 Paderborn (DE); Straznikiewicz, Darius, 33102 Padeborn (DE); Schiller, Andreas, 59555 Lippstadt (DE)
(74) Vertreter: Griepenstroh, Jörg

(56) Entgegenhaltungen:
- WO-A1-94/07709
- DE-B3- 10 256 137
- JP-A- 2009 274 106
- US-A1- 2006 131 927

## Beschreibung

Die Erfindung betrifft einen Türaufprallträger zur Angliederung in eine Kraftfahrzeugtür gemäß den Merkmalen im Oberbegriff von Anspruch 1.

Türaufprallträger dienen in erster Linie zum Schutz von PKW-Insassen vor Verletzungen bei einem Seitenaufprall. Zur Homologation von Kraftfahrzeugen gibt es daher gesetzgeberische Vorschriften, die bestimmte minimale Eindrückwiderstände bei vorgegebenem Weg verlangen. Der Türaufprallträger nimmt im Falle eines Seitenaufpralls die Hauptkräfte auf und leitet sie überwiegend über die Türscharniere und das Türschloss oder auch über so genannte Crashkrallen in die Kraftfahrzeugkarosserie ein. Gleiches gilt für die zulassungsrelevanten Türeindrücktests. Konventionell werden solche Türaufprallträger aus Stahlblech mit hoher Streckgrenze gefertigt, so dass sie eine hohe Steifigkeit quer zur Fahrtrichtung aufweisen.

Durch die DE 196 54 376 B4 zählt ein Seiten- bzw. Türaufprallträger für Kfz-Türen zum Stand der Technik. Dieser besteht aus einem im Querschnitt profilierten Blechstreifen aus einem hochfesten Stahlwerkstoff, der wenigstens eine längslaufende Sicke aufweist.

Die EP 0 662 053 B2 offenbart einen Türaufprallträger, der auf dem überwiegenden Teil seiner Länge ein im Querschnitt hutförmiges Profil aufweist, dessen Endabschnitte zu den Stirnseiten hin abgeflacht ausgebildet sind und sich verbreitern.

Durch die WO 94/07709 A1 ist ein Türaufprallträger bekannt, welcher in seinem Querschnitt durch ein im Wesentlichen hutförmiges Profil ausgenbildet ist und an seinen Endabschnitten zu den Stirnseiten hin abgeflachte Bereiche aufweist.

Grundsätzlich erscheinen die bekannten Bauarten sowohl hinsichtlich des Crashverhaltens als auch des Gewichts verbesserungswürdig.

Der Erfindung liegt daher, ausgehend vom Stand der Technik, die Aufgabe zugrunde, einen im Crashverhalten bei gewichtsoptimiertem Design verbesserten Türaufprallträger zu schaffen.

Die Lösung dieser Aufgabe besteht nach der Erfindung in einem Türaufprallträger gemäß den Merkmalen von Anspruch 1.

Der Türaufprallträger weist auf dem überwiegenden Teil seiner Länge ein im Querschnitt hutförmiges Profil aus Metallblech mit einem Steg und zwei Schenkeln auf. Im mittleren Längenabschnitt des Stegs ist eine Versteifungssicke ausgebildet. Die Sicke ist nach innen in Richtung zu den Stegen hin eingeformt. Das Verhältnis der Tiefe der Sicke zur Höhe in der Mitte des Profils ist zwischen 1 : 3 und 1 : 6 bemessen. Des Weiteren sind im mittleren Längenabschnitt des hutförmigen Profils an den unteren Längskanten der Stege quer abstehende Flügelabschnitte vorgesehen.

Erfindungscharakteristisch ist, dass sich die Querschnittsform zur Mitte des Hutprofils hin vergrößert und im mittleren Längenabschnitt seitliche Flügelabschnitte angestellt sind sowie eine Sicke den oberen Bereich des Hutprofils im mittleren Längenabschnitt verstärkt. Die Sicke und die seitlichen Flügelabschnitte sind dem geforderten Belastungsverhalten angepasst und nur im mittleren Längenabschnitt des hutförmigen Profils vorgesehen. Hierdurch wird ein gleichmäßiges Verformungsverhalten realisiert und gleichzeitig das Gewicht reduziert bzw. optimiert.

Durch die erfindungsgemäße geometrische Gestaltung wird ein gewichtsoptimiertes Design des Türaufprallträgers mit effizientem Crashverhalten erreicht. Der Mittelbereich des Türaufprallträgers ist durch die zwei seitlichen Flügelabschnitte und durch die Sicke verstärkt. Die Sicke sorgt dafür, dass die obere Fläche des Türaufprallträgers bzw. des hutförmigen Profils bei einer Belastung nicht zu früh kollabiert und somit die Kraft bei einem längeren Verformungsweg auf einem hohen Niveau bleibt. Die zwei seitlichen Flügelabschnitte haben die Funktion, bei der Belastung des Profils die seitlichen Stege zu stabilisieren und das schnelle Ausweichen, also ein Aufspreizen oder aber Einklappen, der Stege zu verhindern. Da der Ausgangsquerschnitt des Profils bei einem Seitenaufprall lange erhalten bleibt, bleibt das Kraftniveau länger auf einem hohen Niveau.

Die Sicke und auch die von den Stegen abstehenden Flügelabschnitte sind nur im mittleren Längenabschnitt des Türaufprallträgers vorgesehen. Die Länge des mittleren Längenabschnitts entspricht einem Drittel +/- 25 % der Gesamtlänge des Türaufprallträgers.

Vorteilhafte Ausgestaltungen und Weiterbildungen des grundsätzlichen Erfindungsgedankens sind Gegenstand der abhängigen Ansprüche 2 bis 13.

Sowohl die Übergänge vom Steg zur Sicke als auch die Übergänge von den Schenkeln zu den Flügelabschnitten sind gerundet ausgestaltet. Vorzugsweise sind die Flügelabschnitte bogenförmig gekrümmt und weisen jeweils von der unteren, ebenfalls gekrümmt verlaufenden Längskante ausgehend einen Basisabschnitt und einen sich hieran anschließenden freien Endabschnitt auf, wobei der Endabschnitt unter einem Winkel gegenüber dem Basisabschnitt nach oben angestellt ist.

Der Steg des Hutprofils weist im mittleren Längenabschnitt durch die Sicke einen wellenförmigen Verlauf auf mit zwei bogenförmig gekrümmten Kopfabschnitten, die in die Sicke übergeben. An die Kopfabschnitte schließen sich die geradlinig verlaufenden Schenkel an, die dann über die unteren, gerundet ausgeführten Längskanten in die Flügelabschnitte übergehen. Der Querschnitt des hutförmigen Profils im mittleren Längenabschnitt ist so doppel-S-förmig gestaltet und symmetrisch zur Mittellängesachse mit allseits gerundeten Übergängen.

Die Sicke und auch die von den Stegen abstehenden Flügelabschnitte sind nur im mittleren Längenabschnitt des Türaufprallträgers vorgesehen. Die Länge des mittleren Längenabschnitts entspricht einem Drittel +/-15% der Gesamtlänge des Türaufprallträgers.

Der Querschnitt des hutförmigen Profils verjüngt sich von der Mitte ausgehend sowohl in der Höhe als auch in der Breite zu den Endabschnitten hin. Demzufolge verkleinert sich die Höhe des hutförmigen Profils in den sich an den mittleren Längenabschnitt anschließenden äußeren Längenabschnitten in Richtung zu den äußeren Enden des Türaufprallträgers. Weiterhin verkleinert sich der Abstand zwischen den unteren Längskanten der Stege in den äußeren Längenabschnitten des Türaufprallträgers.

Das hutförmige Profil läuft an seinen beiden Enden in verbreitert ausgebildeten Endabschnitten aus. Die Endabschnitte besitzen flach ausgebildete Flanschbereiche und können auch mit einer weiteren Abkantung zur besseren Anbindung an die Struktur versehen sein.

Im Übergangsbereich von den äußeren Längenabschnitten zu den Endabschnitten sind gegenüber den äußeren Längenabschnitten verbreiterte Funktionsbereiche ausgebildet. Diese dienen zur Anbindung des Türaufprallträgers innerhalb einer Kraftfahrzeugtürstruktur und verbessern darüber hinaus das Steifigkeitsverhalten. Die Stege können im Funktionsbereich eine Öffnung aufweisen, durch welche Montageelemente oder andere Komponenten geführt werden können. Auch besteht die Möglichkeit, weitere Komponenten oder Motageelemente in den Öffnungen zu koppeln.

Der Türaufprallträger kann aus einem hochfesten Kaltformstahl bestehen. Erfindungsgemäß vorteilhaft ist auch ein Türaufprallträger, der aus einem hochfesten Warmformstahl besteht und warmgeformt sowie pressgehärtet ist.

Im Zuge einer weiteren Gewichtsoptimierung kann der Türaufprallträger auch aus einem Leichtmetallwerkstoff, insbesondere einem hochfesten Leichtmetallwerkstoff, vorzugsweise Aluminium, bestehen.

Im Rahmen der Erfindung ist vorgesehen, dass ein hochfester Warmformstahl mit einer Streckgrenze größer als 980 MPa zum Einsatz gelangt. Die Streckgrenze eines hochfesten Kaltformstahls ist größer als 680 MPa. Hinsichtlich des Einsatzes eines Leichtmetallwerkstoffs soll ein hochfestes Aluminium mit einer Streckgrenze größer 350 MPa zum Einsatz gelangen.

In einer bevorzugten Ausführungsvariante ändert das Profil in seinem mittleren Längenabschnitt seine Breite und/oder Höhe um bis zu +/- 10 %, insbesondere +/-5 %. Durch Variation der Höhe und/oder Breite über den mittleren Längenabschnitt entsteht die Möglichkeit, besonders vorteilig auf die Crashanforderungen, die an das Profil gestellt sind, zu reagieren.

Die Erfindung ist nachfolgend anhand eines in den Zeichnungen dargestellten Ausführungsbeispiels näher beschrieben. Es zeigen:
- Figur 1: in perspektivischer Darstellungsweise einen erfindungsgemäßen Türaufprallträger;
- Figur 2: den Türaufprallträger gemäß der Darstellung von Figur 1 in einer Draufsicht und
- Figur 3: einen vertikalen Querschnitt durch die Darstellung der Figur 2 in der Mitte des Türaufprallträgers gemäß der Linie III - III.

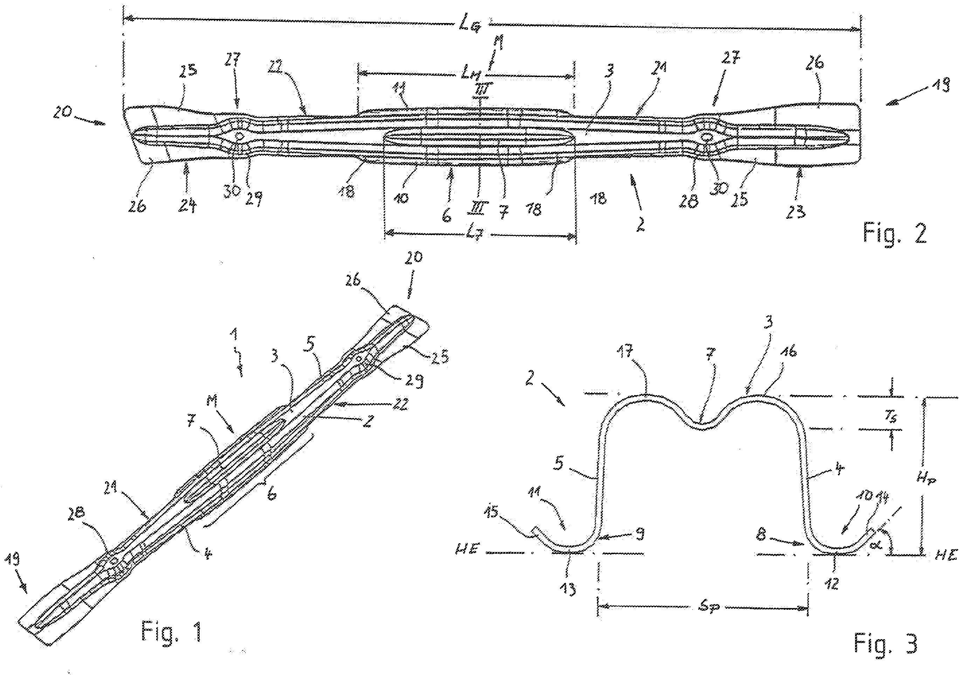

In den Figuren 1 bis 3 ist mit 1 ein erfindungsgemäßer Türaufprallträger bezeichnet. Der Türaufprallträger 1 besteht aus einem Metallblech, vorzugsweise einem hochfesten Kaltformstahl, einem hochfesten Warmformstahl oder einem hochfesten Leichtmetallwerkstoff, wie einem hochfesten Aluminium. Insbesondere besteht der Türaufprallträger 1 aus einem hochfesten Warmformstahl und ist warmgeformt und im Umformwerkzeug pressgehärtet.

Der Türaufprallträger 1 weist auf dem überwiegenden Teil seiner Länge ein im Querschnitt hutförmiges Profil 2 mit einem Steg 3 und zwei seitlichen Schenkeln 4, 5 auf. Im mittleren Längenabschnitt 6 des Türaufprallträgers 1 ist eine Versteifungssicke 7 ausgebildet. Des Weiteren sind im mittleren Längenabschnitt 6 an den unteren, gerundet ausgebildeten Längskanten 8, 9 der Schenkel 4, 5 quer abstehende Flügelabschnitte 10, 11 vorgesehen.

Man erkennt, dass sich die Sicke 7 und die Flügelabschnitte 10, 11 ausschließlich über den mittleren Längenabschnitt 6 erstrecken. Die Flügelabschnitte 10, 11 weisen jeweils einen von den unteren Längskanten 8, 9 nach außen gerichteten Basisabschnitt 12, 13 und einen sich hieran anschließenden freien Endabschnitt 14, 15 auf.

Die freien Endabschnitte 14, 15 der Flügelabschnitte 10, 11 sind gegenüber der sich durch die Basisabschnitte 12, 13 erstreckenden unteren Horizontalebene HE mit einem Winkel α nach oben angestellt. Der Winkel α beträgt im hier dargestellten Ausführungsbeispiel 45°. In der Praxis kann der Winkel α zwischen 30° und 60° liegen.

Der Steg 3 des hutförmigen Profils 2 weist im mittleren Längenabschnitt 6 durch die Sicke 7 einen wellenförmigen Verlauf auf mit zwei bogenförmig gekrümmten Kopfabschnitten 16, 17, die in die Sicke 7 übergehen. An die Kopfabschnitte 16, 17 schließen sich außen die geradlinig verlaufenden Schenkel 4, 5 an.

Die Flügelabschnitte 10, 11 gehen jeweils endseitig über Schrägen 18 in die Längskanten 8, 9 der Schenkel 4, 5 über.

Die Sicke 7 ist nach innen eingeformt. Die Sicke 7 weist gegenüber der Höhe Hp in der Mitte M des Profils 2 eine deutlich geringere Tiefe T_{S} auf. Das Verhältnis der Tiefe T_{S} der Sicke 7 zur Höhe Hp in der Mitte M des Profils 2 ist zwischen 1 : 3 und 1 : 6 bemessen.

Die Sicke 7 verstärkt den oberen Bereich des hutförmigen Profils 2. Die Sicke 7 und die Flügelabschnitte 10, 11 sind den Belastungen angepasst und nur im mittleren Längenabschnitt 6 des Türaufprallträgers 1 vorgesehen. Die Länge L_{M} des mittleren Längenabschnitts 6 entspricht einem Drittel +/- 25 %, insbesondere +/- 15 % der Gesamtlänge L_{G} des Türaufprallträgers 1. Die Sicke 7 weist dabei eine Gesamtlänge L₇ auf, wobei die Länge L₇ im Wesentlichen der Länge L_{M} entspricht. Im Rahmen der Erfindung ist es jedoch auch vorstellbar, dass die Länge L₇ kürzer oder aber auch länger ist, als die Länge L_{M}. Durch die erfindungsgemäße geometrische Gestaltung ist der Querschnitt zur Mitte M hin vergrößert. Insgesamt wird ein gleichmäßiges Verformungsverhalten realisiert und gleichzeitig das Gewicht des Türaufprallträgers 1 reduziert.

An den mittleren Längenabschnitt 6 des Türaufprallträgers 1 schließen sich beidseits in Richtung zu den Enden 19, 20 hin äußere Längenabschnitte 21, 22 an. Das hutförmige Profil 2 verjüngt sich in den äußeren Längenabschnitten 21, 22, und zwar sowohl in der Breite als auch in der Höhe. Demzufolge verkleinert sich die Höhe Hp des hutförmigen Profils 2 in den äußeren Längenabschnitten 21, 22. Weiterhin verkleinert sich der Abstand Sp zwischen den unteren Längskanten 8, 9 der Schenkel 4, 5 im Verlauf der äußeren Längenabschnitte 21, 22. Durch die erfindungsgemäße Geometrie des Türaufprallträgers 1 wird ein gewichts- und crashoptimiertes Design realisiert. Der mittlere Längenabschnitt 6 des Türaufprallträgers 1 ist durch die zwei seitlichen Flügelabschnitte 10, 11 und durch die Sicke 7 im Steg 3 des mittleren Längenabschnitts 6 verstärkt. Die Sicke 7 erhöht die Steifigkeit quer zur Fahrtrichtung, wobei die Kraft über einen längeren Verformungsweg auf einem hohen Niveau gehalten werden kann. Die zwei seitlichen Flügelabschnitte 10, 11 haben die Funktion, bei einer Belastung des Profils 2 die Schenkel 4, 5 zu stabilisieren und deren schnelles Kollabieren bzw. Ausweichen zu verhindern. Insgesamt bleibt so das Kraftniveau länger in einem höheren Bereich, wodurch der Ausgangsquerschnitt des Profils 2 bzw. des Türaufprallträgers 1 insgesamt länger erhalten bleibt.

Das hutförmige Profil 2 läuft an beiden Enden 19, 20 in verbreitert ausgebildete Endabschnitte 23, 24 aus. Zur Abstützung und Eingliederung des Türaufprallträgers 1 in eine Türstruktur weisen die Endabschnitte 23, 24 flach ausgebildete Flanschbereiche 25, 26 auf.

Weiterhin besitzt das hutförmige Profil 2 im Übergangsbereich 27 zwischen den äußeren Längenabschnitten 21, 22 zu den Endabschnitten 23, 24 verbreiterte, topfförmige Funktionsbereiche 28, 29. Man erkennt, dass der Steg 3 im Funktionsbereich 28, 29 eine Öffnung 30 aufweist. Die verbreiterten Funktionsbereiche 28, 29 tragen zur Erhöhung der Quersteifigkeit bei und dienen zur Montage und Einbindung des Türaufprallträgers 1 in eine Türstruktur, wobei die Öffnungen 30 zur Durchführung oder Koppelung von Montageelementen oder anderen Komponenten dienen.

### Bezugszeichen:

- 1 -: Türaufprallträger
- 2 -: hutförmiges Profil
- 3 -: Steg
- 4 -: Schenkel
- 5 -: Schenkel
- 6 -: mittlerer Längenabschnitt
- 7 -: Sicke
- 8 -: Längskante
- 9 -: Längskante
- 10 -: Flügelabschnitt
- 11 -: Flügelabschnitt
- 12 -: Basisabschnitt
- 13 -: Basisabschnitt
- 14 -: Endabschnitt v. 10
- 15 -: Endabschnitt v. 11
- 16 -: Kopfabschnitt
- 17 -: Kopfabschnitt
- 18 -: Schräge
- 19 -: Ende v. 1
- 20 -: Ende v. 1
- 21 -: äußerer Längenabschnitt
- 22 -: äußerer Längenabschnitt
- 23 -: Endabschnitt
- 24 -: Endabschnitt
- 25 -: Flanschbereich
- 26 -: Flanschbereich
- 27 -: Übergangsbereich
- 28 -: Funktionsbereich
- 29 -: Funktionsbereich
- 30 -: Öffnung
- M -: Mittel v. 1
- α -: Winkel
- T_{S} -: Tiefe v. 7
- HE -: Horizontalebene
- H_{P} -: Höhe v. 2
- L_{M} -: Länge v. 6
- L_{G} -: Gesamtlänge v. 1
- L₇ -: Länge v. 7
- S_{P} -: Abstand zw. 4 u. 5

## Patentansprüche

1. Türaufprallträger für ein Kraftfahrzeug, welcher auf dem überwiegenden Teil seiner Länge ein im Querschnitt hutförmiges Profil (2) aus Metallblech mit einem Steg (3) und zwei Schenkeln (4, 5) aufweist, **dadurch gekennzeichnet, dass** der Steg (3) nur in einem mittleren Längenabschnitt (6) eine Sicke (7) aufweist, wobei das Verhältnis der Tiefe (T_{S}) der Sicke (7) zur Höhe (Hp) des Profils (2) in der Mitte (M) zwischen 1 : 3 und 1 : 6 bemessen ist und nur im mittleren Längenabschnitt (6) an den unteren Längskanten (8, 9) der Schenkel (4, 5) quer abstehende Flügelabschnitte (10, 11) vorgesehen sind, wobei die Länge (L_{M}) des mittleren Längenabschnitts (6) einem Drittel +/- 25% der Gesamtlänge (L_{G}) des Türaufprallträgers (1) entspricht.

2. Türaufprallträger nach Anspruch 1, **dadurch gekennzeichnet, dass** jeder Flügelabschnitt (10, 11) einen von der Längskante (8, 9) ausgehenden Basisabschnitt (12, 13) und einen sich hieran anschließenden freien Endabschnitt (14, 15) aufweist, wobei der Endabschnitt (14, 15) nach oben angestellt ist.

3. Türaufprallträger nach Anspruch 1 oder 2, **dadurch gekennzeichnet, dass** die Länge (L_{M}) des mittleren Längenabschnitts (6) einem Drittel +/- 15 % der Gesamtlänge (L_{G}) des Türaufprallträgers (1) entspricht.

4. Türaufprallträger nach einem der Ansprüche 1 bis 3, **dadurch gekennzeichnet, dass** sich beidseits an den mittleren Längenabschnitt (6) äußere Längenabschnitte (21, 22) anschließen, wobei sich die Höhe (Hp) des hutförmigen Profils (2) in den äußeren Längenabschnitten (21, 22) verkleinert.

5. Türaufprallträger nach einem der Ansprüche 1 bis 4, **dadurch gekennzeichnet, dass** sich der Abstand (Sp) zwischen den unteren Längskanten (8, 9) der Schenkel (4, 5) in äußeren Längenabschnitten (21, 22) des Profils (2) verkleinert.

6. Türaufprallträger nach einem der Ansprüche 1 bis 5, **dadurch gekennzeichnet, dass** das hutförmige Profil (2) an beiden Enden (19, 20) in verbreitert ausgebildete Endabschnitte (23, 24) ausläuft.

7. Türaufprallträger nach Anspruch 6, **dadurch gekennzeichnet, dass** die Endabschnitte (23, 24) flach ausgebildete Flanschbereiche (25, 26) aufweisen.

8. Türaufprallträger nach Anspruch 6 oder 7, **dadurchgekennzeichnet,** dass das hutförmige Profil (2) im Übergangsbereich (27) zu den Endabschnitten (23, 24) verbreiterte Funktionsbereiche (28, 29) aufweist.

9. Türaufprallträger nach Anspruch 8, **dadurch gekennzeichnet, dass** der Steg (3) im Funktionsbereich (28, 29) eine Öffnung (30) aufweist.

10. Türaufprallträger nach einem der Ansprüche 1 bis 9, **dadurch gekennzeichnet, dass** das Profil (2) aus einem hochfesten Kaltformstahl besteht.

11. Türaufpraliträger nach einem der Ansprüche 1 bis 9, **dadurch gekennzeichnet, dass** das Profil (2) aus einem hochfesten Warmformstahl besteht und warmgeformt sowie pressgehärtet ist.

12. Türaufprallträger nach einem der Ansprüche 1 bis 9, **dadurch gekennzeichnet, dass** das Profil (2) aus einem Leichtmetallwerkstoff, insbesondere einem hochfesten Aluminium, besteht.

13. Türaufprallträger nach mindestens einem der Ansprüche 1 bis 12, **dadurch gekennzeichnet, dass** das Profil (2) über den mittleren Längenabschnitt (6) in seiner Höhe (Hp) und/oder dem Abstand (Sp) zwischen den Schenkeln (4, 5) um +/-10 %, insbesondere +/- 5 % variiert.

## Claims

1. Door impact absorber for a motor vehicle, which over the majority of its length has a profile (2) which is hat-like in cross section made from sheet metal comprising a web (3) and two limbs (4, 5), **characterised in that** the web (3) has a beading (7) only in a central longitudinal section (6), wherein the ratio of the depth (T_{S}) of the beading (7) to the height (Hp) of the profile (2) in the middle (M) is between 1:3 and 1:6 and transversely protruding wing sections (10,11) are provided only in the central longitudinal section (6) on the lower longitudinal edges (8, 9) of the limbs (4, 5), wherein the length (L_{M}) of the central longitudinal section (6) corresponds to a third +/- 25% of the total length (L_{G}) of the door impact absorber (1).

2. Door impact absorber according to claim 1, **characterised in that** each wing section (10, 11) comprises a base section (12, 13) coming from the longitudinal edge (8, 9) and an adjoining free end section (14, 15), wherein the end section (14, 15) is turned upwards.

3. Door impact absorber according to claim 1 or 2, **characterised in that** the length (L_{M}) of the central longitudinal section (6) corresponds to a third +/- 15% of the total length (L_{G}) of the door impact absorber (1).

4. Door impact absorber according to any one of claims 1 to 3, **characterised in that** outer longitudinal sections (21, 22) adjoin both sides of the central longitudinal section (6), wherein the height (Hp) of the hat-like profile (2) is reduced in the outer longitudinal sections (21, 22).

5. Door impact absorber according to any one of claims 1 to 4 **characterised in that** the distance (S_{P}) between the lower longitudinal edges (8, 9) of the limbs (4, 5) is reduced in the outer longitudinal sections (21, 22) of the profile (2).

6. Door impact absorber according to any one of claims 1 to 5 **characterised in that** at both ends (19, 20) of the hat-like profile (2) runs into widened end sections (23, 24).

7. Door impact absorber according to claim 6, **characterised in that** the end sections (23, 24) have flat flange areas (25, 26).

8. Door impact absorber according to claim 6 or 7, **characterised in that** the hat-like profile (2) has widened functional areas (28, 29) in the transitional area (27) to the end sections (23, 24).

9. Door impact absorber according to claim 8, **characterised in that** the web (3) has an opening (30) in the functional area (28, 29).

10. Door impact absorber according to any one of claims 1 to 9, **characterised in that** the profile (2) is made from a high-strength cold-formed steel.

11. Door impact absorber according to any one of claims 1 to 9, **characterised in that** the profile (2) is made from a high-strength hot-formed steel and is hot-formed and press-hardened.

12. Door impact absorber according to any one of claims 1 to 9, **characterised in that** the profile (2) is made from a light metal material, in particular a high-strength aluminium.

13. Door impact absorber according to at least one of claims 1 to 12, **characterised in that** the over the central longitudinal section (6) the profile (2) varies in height (Hp) and/or the distance (Sp) between the limbs (4, 5) by +/-10%, in particular +/- 5%.

## Revendications

1. Support de collision de porte pour véhicule automobile, qui présente sur la partie prépondérante de sa longueur un profil (2) en forme de chapeau en coupe transversale de tôle métallique avec une traverse (3) et deux branches (4, 5), **caractérisé en ce que** la traverse (3) présente seulement dans une section longitudinale centrale (6) une ondulation (7), dans lequel le rapport de la profondeur (T_{S}) de la ondulation (7) à la hauteur (Hp) du profil (2) au centre (M) se situe entre 1:3 et 1:6 et il est prévu seulement dans la section longitudinale centrale (6) des sections d'aile (10,11) s'écartant transversalement sur les bords longitudinaux inférieurs (8, 9) des branches (4, 5), dans lequel la longueur (L_{M}) de la section longitudinale centrale (6) correspond à un tiers +/- 25 % de la longueur totale (L_{G}) du support de collision de porte (1).

2. Support de collision de porte selon la revendication 1, **caractérisé en ce que** chaque section d'aile (10, 11) présente une section de base (12, 13) affleurant des bords longitudinaux (8, 9) et une section d'extrémité libre (14, 15) qui s'y raccorde, dans lequel la section d'extrémité (14, 15) est tournée vers le haut.

3. Support de collision de porte selon la revendication 1 ou 2, **caractérisé en ce que** la longueur (L_{M}) de la section longitudinale centrale (6) correspond à un tiers +/-15 % de la longueur totale (L_{G}) du support de collision de porte (1).

4. Support de collision de porte selon l'une quelconque des revendications 1 à 3, **caractérisé en ce que**, des deux côtés, sur la section longitudinale centrale (6) se raccordent des sections longitudinales externes (21, 22), dans lequel la hauteur (Hp) du profil en forme de chapeau (2) se réduit dans les sections longitudinales externes (21, 22).

5. Support de collision de porte selon l'une quelconque des revendications 1 à 4, **caractérisé en ce que** la distance (Sp) entre les bords longitudinaux inférieurs (8, 9) des branches (4, 5) se réduit dans les sections longitudinales externes (21, 22) du profil (2).

6. Support de collision de porte selon l'une quelconque des revendications 1 à 5, **caractérisé en ce que** le profil en forme de chapeau (2) se termine aux deux extrémités (19, 20) dans des sections d'extrémité élargies (23, 24).

7. Support de collision de porte selon la revendication 6, **caractérisé en ce que** les sections d'extrémité (23, 24) présentent des zones bridées plates (25, 26).

8. Support de collision de porte selon la revendication 6 ou 7, **caractérisé en ce que** le profil en forme de chapeau (2) présente des zones fonctionnelles élargies (28, 29) dans la zone de transition (27) avec les sections d'extrémité (23, 24).

9. Support de collision de porte selon la revendication 8, **caractérisé en ce que** la traverse (3) présente dans la zone fonctionnelle (28, 29) une ouverture (30).

10. Support de collision de porte selon l'une quelconque des revendications 1 à 9, **caractérisé en ce que** le profil (2) est constitué d'acier d'estampage à froid de grande résistance.

11. Support de collision de porte selon l'une quelconque des revendications 1 à 9, **caractérisé en ce que** le profil (2) est constitué d'un acier d'estampage à chaud de grande résistance et est estampé à chaud ainsi que durci sous presse.

12. Support de collision de porte selon l'une quelconque des revendications 1 à 9, **caractérisé en ce que** le profil (2) est constitué d'un matériau métallique léger, en particulier d'un aluminium de grande résistance.

13. Support de collision de porte selon au moins l'une quelconque des revendications 1 à 12, **caractérisé en ce que** le profil (2) varie sur la section longitudinale centrale (6) dans sa hauteur (Hp) et/ou dans la distance (Sp) entre les branches (4, 5) de +/-10 %, en particulier de +/- 5 %.
